# EUROPEAN PATENT APPLICATION

(11) **EP 4 443 965 A1**
(43) Date of publication of application: **09.10.2024**
(21) Application number: 24164161.2
(22) Date of filing: 18.03.2024
(51) Int. Cl.: H04W 36/00, H04W 24/10

(54) **L1/L2 TRIGGERED MOBILITY CELL MEASUREMENT CONTROL**

(30) Priority: 06.04.2023 GB 202305157
(71) Applicant: Nokia Technologies Oy, 02610 Espoo (FI)
(72) Inventor: KAINULAINEN, Jani-Pekka, Cottenham, CB24 8BA (GB); DALSGAARD, Lars, 90230 Oulu (FI); DIMNIK, Riikka Karoliina, 02880 Kirkkonummi (FI); ZHANG, Xin, 82024 Taufkirchen (DE); HENTTONEN, Tero, 02760 ESPOO (FI); STANCZAK, Jedrzej, 50216 Wroclaw (PL)
(74) Representative: Bryers Intellectual Property Ltd

(57) **Abstract**

There are provided measures for L1/L2 triggered mobility cell measurement control. Such measures exemplarily comprise determining a plurality of target cell candidates for L1/L2 triggered mobility of a terminal, deciding on a first cell to be measured out of the plurality of target cell candidates, and transmitting, towards the terminal, information indicative of a Layer1 measurement demand with respect to said first cell to be measured.

## Description

### Field

Various example embodiments relate to L1/L2 triggered mobility cell measurement control. More specifically, various example embodiments exemplarily relate to measures (including methods, apparatuses and computer program products) for realizing L1/L2 triggered mobility cell measurement control.

### Background

The present specification generally relates to Layer! (L1) / Layer2 (L2) based inter-cell mobility.

In relation to L1/L2 based inter-cell mobility, L1/L2 triggered mobility (LTM) is a procedure in which a gNB receives L1 measurement reports from user equipments (UE), and on the basis thereof, the gNB changes UEs' serving cell(s) by a cell switch command through a medium access control (MAC) control element (CE), which indicates an LTM candidate cell configuration that the gNB previously prepared and provided to the UE through radio resource control (RRC) signaling.

Then cell switch is triggered by selecting the indicated LTM candidate cell configuration as the target configuration by the gNB.

An LTM candidate cell configuration can only be added, modified and released by network via RRC signaling.

The LTM procedure can be used to reduce the mobility latency. LTM supports mobility in general including at least intra-frequency and inter-frequency mobility, including mobility to inter-frequency cell that is not a current serving cell.

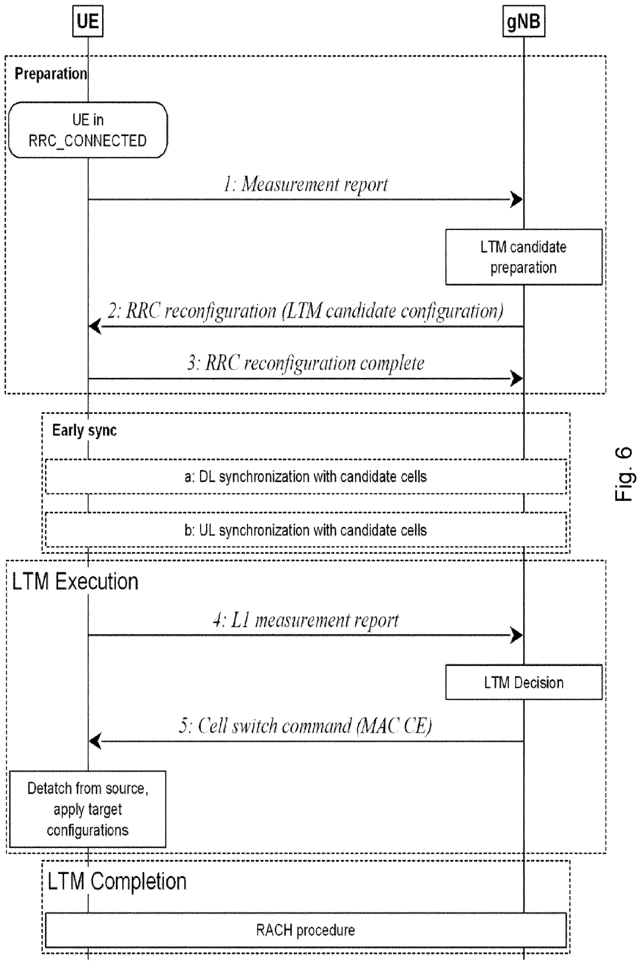

Figure 6 shows a schematic diagram of signaling sequences, and in particular illustrates a baseline signaling diagram reflecting above-outlined LTM principles.

As illustrated in Figure 6, a UE reports (step 1 in Figure 6) a Layer3 (L3) measurement to the network.

This measurement report allows the network to understand which cells can be configured as potential candidates for the UE.

Subsequently, the network configures the UE with a number of LTM candidate cell configurations (step 2 in Figure 6).

The network may select not to configure the LTM procedure for the UE or the LTM candidate cell configurations for the UE, if the UE has not transmitted at least one L3 measurement report to the network, which includes the candidate cells. In another embodiment, the network may configure the LTM procedure without receiving any L3 measurement report from the UE. In such a case, the network may wait for the at least one L3 measurement report before configuring the LTM candidate cell(s).

There may however be no restriction on the network side for configuring LTM L1 measurement before receiving L3 measurements.

The UE may be configured to transmit L1 measurement report(s) (step 4 of Figure 6) along the reception of candidate cell LTM configuration. As long as the L1 measurement report reaches the network within the defined known condition, the LTM candidate cells are always known.

According to the outlined LTM principles, a UE can be configured with multiple candidate cells (e.g., up to 8 or more candidate cell configurations) via RRC configuration. The UE is required to perform measurements on one or multiple configured candidate cells, for instance, either based on a semi-persistent L1-measurement report trigger mechanism or an event based L1-measurement report triggering mechanism or L1-RSRP measurement reporting or a configured reporting method which could be continuous while configured.

However, UEs have limited amount of resources to measure because of power, complexity and energy efficiency reasons.

Therefore, it is not practical for UEs to measure all of the candidate cells that are configured.

For example, when a UE is configured with frequency range 2 (FR2) cell, with 120KHz subcarrier spacing (SCS=120KHz), 320 slots are equivalent to 40 ms (120us/slot * 320 slots = 40ms).

If, in such scenario, the UE has been configured with 8 target cells and needs to transmit L1 reports for each of those every 40ms, this means that the LTM-configured UE would need to transmit 8 measurements every 40ms.

This would have significant impact on the UE's measurement power consumption. Performing such frequent measurements (and measurement reporting) for mobility purpose (cell switch) is not practical.

Hence, the problem arises that, in general, L1/L2 based inter-cell mobility control may lead to an increased measurement and reporting load and unacceptable power consumption of UE's, and that approaches for avoiding or limiting such load and power consumption are to be provided.

Hence, there is a need to provide for L1/L2 triggered mobility cell measurement control.

### Summary

Various example embodiments aim at addressing at least part of the above issues and/or problems and drawbacks.

Various aspects of example embodiments are set out in the appended claims.

According to an exemplary aspect, there is provided a method comprising determining a plurality of target cell candidates for Layer1/Layer2 triggered mobility of a terminal, deciding on a first cell to be measured out of the plurality of target cell candidates, and transmitting, towards the terminal, information indicative of a Layer1 measurement demand with respect to said first cell to be measured.

According to an exemplary aspect, there is provided a method of a terminal, the method comprising receiving information indicative of a Layer1 measurement demand with respect to a first cell to be measured out of a plurality of target cell candidates for Layer1/Layer2 triggered mobility of the terminal, deriving a Layer1 measurement configuration with respect to said Layer1 measurement demand with respect to said first cell to be measured, performing a Layer1 measurement with respect to said first cell to be measured based on said Layer1 measurement configuration, and transmitting information indicative of a Layer1 measurement result with respect to said first cell to be measured.

According to an exemplary aspect, there is provided an apparatus comprising determining circuitry configured to determine a plurality of target cell candidates for Layer1/Layer2 triggered mobility of a terminal, deciding circuitry configured to decide on a first cell to be measured out of the plurality of target cell candidates, and transmitting circuitry configured to transmit, towards the terminal, information indicative of a Layer1 measurement demand with respect to said first cell to be measured.

According to an exemplary aspect, there is provided an apparatus of a terminal, the apparatus comprising receiving circuitry configured to receive information indicative of a Layer1 measurement demand with respect to a first cell to be measured out of a plurality of target cell candidates for Layer1/Layer2 triggered mobility of the terminal, deriving circuitry configured to derive a Layer1 measurement configuration with respect to said Layer1 measurement demand with respect to said first cell to be measured, performing circuitry configured to perform a Layer1 measurement with respect to said first cell to be measured based on said Layer1 measurement configuration, and transmitting circuitry configured to transmit information indicative of a Layer1 measurement result with respect to said first cell to be measured.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform determining a plurality of target cell candidates for Layer1/Layer2 triggered mobility of a terminal, deciding on a first cell to be measured out of the plurality of target cell candidates, and transmitting, towards the terminal, information indicative of a Layer1 measurement demand with respect to said first cell to be measured.

According to an exemplary aspect, there is provided an apparatus of a terminal, the apparatus comprising at least one processor, at least one memory including computer program code, and at least one interface configured for communication with at least another apparatus, the at least one processor, with the at least one memory and the computer program code, being configured to cause the apparatus to perform receiving information indicative of a Layer1 measurement demand with respect to a first cell to be measured out of a plurality of target cell candidates for Layer1/Layer2 triggered mobility of the terminal, deriving a Layer1 measurement configuration with respect to said Layer1 measurement demand with respect to said first cell to be measured, performing a Layer1 measurement with respect to said first cell to be measured based on said Layer1 measurement configuration, and transmitting information indicative of a Layer1 measurement result with respect to said first cell to be measured.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient control of measurements, reduction thereof, and thus, reduction of load and power consumption, to thereby solve at least part of the problems and drawbacks identified in relation to the prior art.

By way of example embodiments, there is provided L1/L2 triggered mobility cell measurement control. More specifically, by way of example embodiments, there are provided measures and mechanisms for realizing L1/L2 triggered mobility cell measurement control.

Thus, improvement is achieved by methods, apparatuses and computer program products enabling/realizing L1/L2 triggered mobility cell measurement control.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a schematic diagram of a procedure according to example embodiments,
Figure 5 is a schematic diagram of a procedure according to example embodiments,
Figure 6 shows a schematic diagram of signaling sequences,
Figure 7 shows a schematic diagram of signaling sequences according to example embodiments,
Figure 8 is a block diagram alternatively illustrating apparatuses according to example embodiments, and
Figure 9 is a block diagram illustrating an apparatus according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

As used herein, "at least one of the following:" and "at least one of" and similar wording, where the list of two or more elements are joined by "and" or "or", mean at least any one of the elements, or at least any two or more of the elements, or at least all the elements.

According to example embodiments, in general terms, there are provided measures and mechanisms for (enabling/realizing) L1/L2 triggered mobility cell measurement control.

As mentioned above, an LTM candidate cell configuration can be added, modified, and released by network via RRC signaling. When a UE is configured with multiple candidate cells (for example 8 or more candidate cell configurations), the UE is required to perform measurements on the multiple configured candidate cells. In order for the UE to perform measurements on less candidate cells, a very limited number of candidate cells may be configured to a UE. Such approach, however, would make a RRC reconfiguration procedure necessary whenever a new candidate cell is added to the list of cells. Such approach is thus not practical as well. In such a case, according to the above-outlined LTM principles, the network cannot control which cells out of the LTM candidate cell configuration shall be measured and reported by the UE.

In view of the above, in brief, according to example embodiments, a mechanism is provided for the network to indicate target cell(s) to measure, measurement trigger(s), and reference signal(s) to use. After receiving this indication, the UE performs the indicated measurements on the target cell(s) and resources, and may transmit one or more LTM measurement report to the network. The measurements performed by the UE are LTM related measurements. LTM related measurements may be, for example, L1-measurements, L3-measurements, or a mix thereof, and may be based on SSB and/or CSI-RS or a mix thereof, or some other reference signal(s).

In the description below, L1-measurments is used as a non-restricting example for LTM related measurements according to example embodiments.

According to example embodiments, the network decision to trigger this indication can be
- based on an L3 measurement report transmitted by the UE; Here, it is noted that the UE performs L3 measurements periodically (longer periodicity than L1 measurements); Based on this L3 measurement report, the network can trigger L1 target measurement on/for a selected cell, or
- another network trigger (e.g., serving cell congestion, radio link failure, etc.).

According to further example embodiments, the network may implement a "pull-based" measurement scheme, where the network asks/requests the measurements, for instance in certain time intervals. In such case, the network can also request an exact measurement type. The network decision to trigger the above-mentioned indication may be based on measurement input caused by such request.

The network can indicate this to the UE in order to perform changes to the measurement reporting. In other words, the network can trigger this indication (to the UE) to perform or initiate changes to the measurement reporting.

According to example embodiments, the network performs a decision on which target cell the UE has to perform measurements from LTM candidate configurations, and indicates the measurement resource(s) to the UE. In particular, according to example embodiments, the network transmits one or more of an indication of a target cell ID (e.g. physical cell ID (PCI) derived), a measurement resource type (e.g. synchronization signal block (SSB) index or channel state information reference signal (CSI-RS)), and/or a measurement reporting mechanism (e.g., event based or semi-persistent, immediate reporting).

Upon receiving this indication, according to example embodiments, the UE starts to perform L1-measurements on the indicated target cell:
- according to example embodiments, the UE may perform semi-persistent L1-measurements based on requirements specified e.g. in TS 38.331 and transmits a measurement report(s),
- according to example embodiments, the UE may wait until conditions specified in event based reporting are met, and transmits a report.
- according to example embodiments, the UE may perform measurements immediately, and transmit one or more report to the network for example once the required measurement accuracy is reached.

Reports may be associated with the target cell ID, measurement resource, and/or reporting type based on the target cell L1 measurement indication.

In some cases, reports are associated with the target cell ID and optionally with a measurement resource, and a reporting type based on the target cell L1 measurement indication.

In some cases, the target cell ID can be a reference to the original RRC measurement configuration.

Purpose of this target cell measurement indication is to assist the UE to select a target cell from the number of possible candidate cells (and/or, in some cases, to require the UE to measure the target cell and transmit a measurement report), and to trigger measurement and/or target cell evaluation process (e.g., event triggered reporting).

Example embodiments are specified below in more detail.

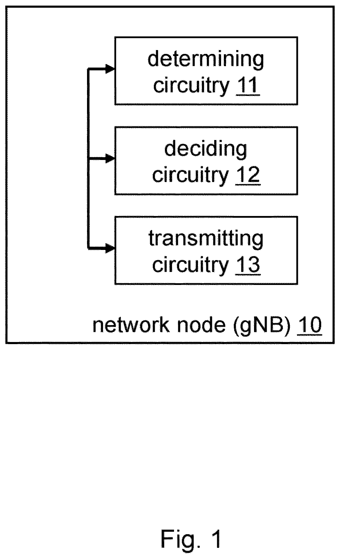

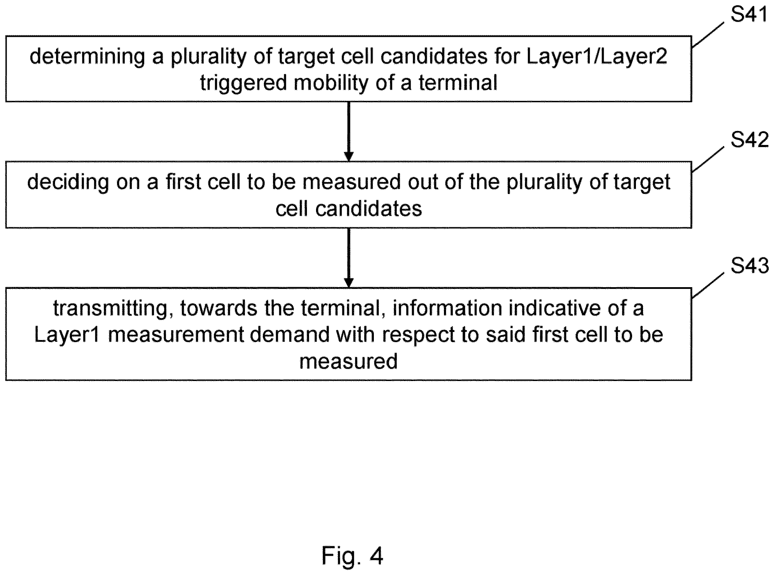

Figure 1 is a block diagram illustrating an apparatus according to example embodiments. The apparatus may be a network node or entity 10 such as a base station (e.g. a gNB) comprising a determining circuitry 11, a deciding circuitry 12, and a transmitting circuitry 13. The determining circuitry 11 determined a plurality of target cell candidates for Layer1/Layer2 triggered mobility of a terminal. The deciding circuitry 12 decides on a first cell to be measured out of the plurality of target cell candidates. The transmitting circuitry 13 transmits, towards the terminal, information indicative of a Layer1 measurement demand with respect to said first cell to be measured. Figure 4 is a schematic diagram of a procedure according to example embodiments. The apparatus according to Figure 1 may perform the method of Figure 4 but is not limited to this method. The method of Figure 4 may be performed by the apparatus of Figure 1 but is not limited to being performed by this apparatus.

As shown in Figure 4, a procedure according to example embodiments comprises an operation of determining (S41) a plurality of target cell candidates for Layer1/Layer2 triggered mobility of a terminal, an operation of deciding (S42) on a first cell to be measured out of the plurality of target cell candidates, and an operation of transmitting (S43), towards the terminal, information indicative of a Layer1 measurement demand with respect to said first cell to be measured.

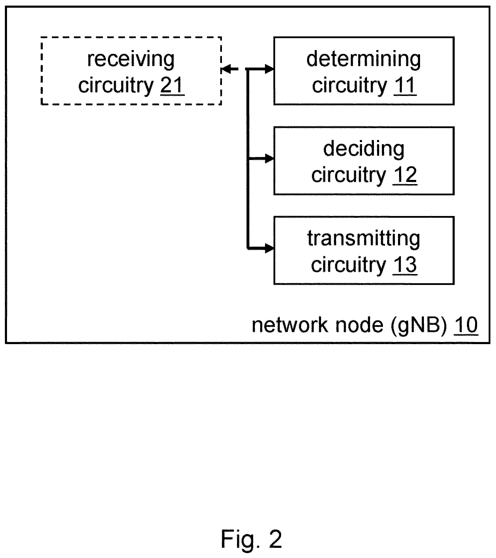

Figure 2 is a block diagram illustrating an apparatus according to example embodiments. In particular, Figure 2 illustrates a variation of the apparatus shown in Figure 1. The apparatus according to Figure 2 may thus further comprise a receiving circuitry 21.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 4, exemplary additional operations are given, which are inherently independent from each other as such. According to such variation, an exemplary method according to example embodiments may comprise an operation of receiving, from said terminal, information indicative of a Layer1 measurement result with respect to said first cell to be measured.

According to a variation of the procedure shown in Figure 4, exemplary additional operations are given, which are inherently independent from each other as such. According to such variation, an exemplary method according to example embodiments may comprise an operation of deciding, based on said information indicative of said Layer1 measurement result with respect to said first cell to be measured, to perform a cell switch of said terminal to said first cell to be measured.

According to a variation of the procedure shown in Figure 4, exemplary additional operations are given, which are inherently independent from each other as such. According to such variation, an exemplary method according to example embodiments may comprise an operation of deciding, based on said information indicative of said Layer1 measurement result with respect to said first cell to be measured, on a second cell to be measured out of said plurality of target cell candidates, and an operation of transmitting, towards said terminal, information indicative of a Layer1 measurement demand with respect to said second cell to be measured. This may happen when the network decides that a new target cell candidate shall be added to the group of measured target cell candidate(s), e.g. when the measurement reports indicate deteriorating link quality towards the currently measured target cell candidates.

According to further example embodiments, said terminal is configured to perform said Layer1 measurement only to a subset of the plurality of target cell candidates.

According to further example embodiments, a transmitted configuration indicative of said plurality of measurement target cell candidates is indicative of that Layer1 measurement with respect to cells out of said plurality of target cell candidates and/or Layer1 measurement result reporting with respect to cells out of said plurality of target cell candidates is subject to Layer1 measurement demand issuance.

According to further example embodiments, said deciding on said first cell to be measured is based on receipt of an Layer3 measurement report from said terminal.

According to further example embodiments, said Layer1 measurement demand with respect to said first cell to be measured is indicative of at least one of the following: said first cell, or a Layer1 measurement type, or a Layer1 measurement reporting type.

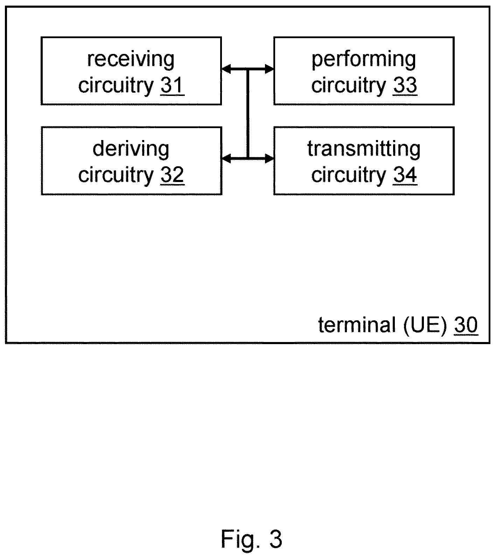

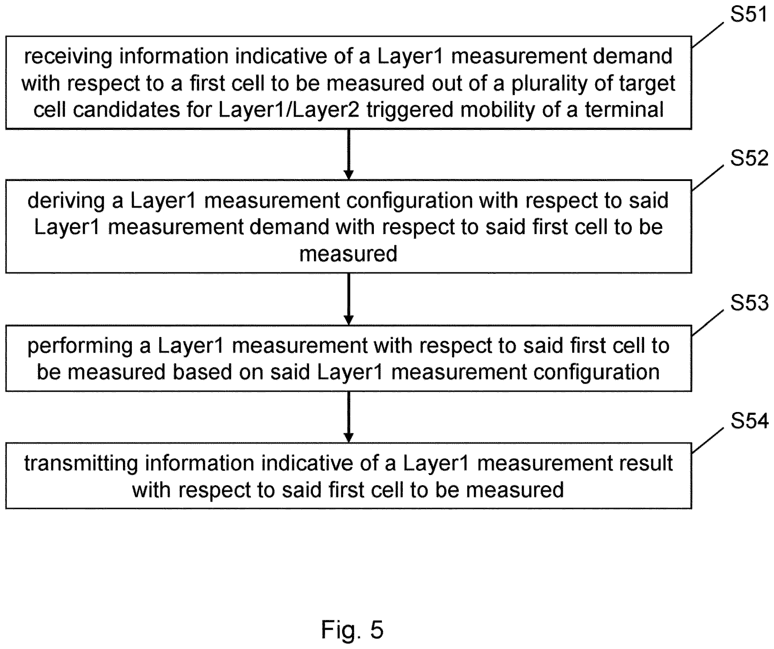

Figure 3 is a block diagram illustrating an apparatus according to example embodiments. The apparatus may be a terminal 30 (e.g. a user equipment (UE)) comprising a receiving circuitry 31, a deriving circuitry 32, a performing circuitry 33, and a transmitting circuitry 34. The receiving circuitry 31 receives information indicative of a Layer1 measurement demand with respect to a first cell to be measured out of a plurality of target cell candidates for Layer1/Layer2 triggered mobility of the terminal. The deriving circuitry 32 derives a Layer1 measurement configuration with respect to said Layer1 measurement demand with respect to said first cell to be measured. The performing circuitry (or measurement circuitry) 33 performs a Layer1 measurement with respect to said first cell to be measured based on said Layer1 measurement configuration. The transmitting circuitry 34 transmits information indicative of a Layer1 measurement result with respect to said first cell to be measured. Figure 5 is a schematic diagram of a procedure according to example embodiments. The apparatus according to Figure 3 may perform the method of Figure 5 but is not limited to this method. The method of Figure 5 may be performed by the apparatus of Figure 3 but is not limited to being performed by this apparatus.

As shown in Figure 5, a procedure according to example embodiments comprises an operation of receiving (S51) information indicative of a Layer1 measurement demand with respect to a first cell to be measured out of a plurality of target cell candidates for Layer1/Layer2 triggered mobility of the terminal, an operation of deriving (S52) a Layer1 measurement configuration with respect to said Layer1 measurement demand with respect to said first cell to be measured, an operation of performing (S53) a Layer1 measurement with respect to said first cell to be measured based on said Layer1 measurement configuration, and an operation of transmitting (S54) information indicative of a Layer1 measurement result with respect to said first cell to be measured.

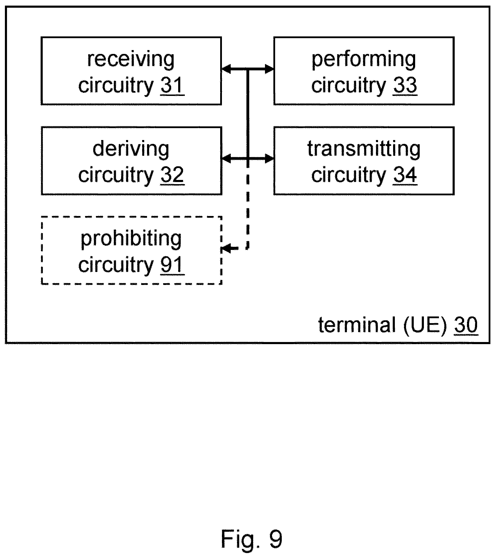

Figure 9 is a block diagram illustrating an apparatus according to example embodiments. In particular, Figure 9 illustrates a variation of the apparatus shown in Figure 3. The apparatus according to Figure 9 may thus further comprise a prohibiting circuitry 91.

In an embodiment at least some of the functionalities of the apparatus shown in Figure 3 (or 9) may be shared between two physically separate devices forming one operational entity. Therefore, the apparatus may be seen to depict the operational entity comprising one or more physically separate devices for executing at least some of the described processes.

According to a variation of the procedure shown in Figure 5, exemplary additional operations are given, which are inherently independent from each other as such. According to such variation, an exemplary method according to example embodiments may comprise an operation of receiving information indicative of a Layer1 measurement demand with respect to a second cell to be measured out of said plurality of target cell candidates, an operation of deriving a Layer1 measurement configuration with respect to said Layer1 measurement demand with respect to said second cell to be measured, and an operation of performing a Layer1 measurement with respect to said second cell to be measured based on said Layer1 measurement configuration.

According to further example embodiments, said terminal is configured to perform said Layer1 measurement only to a subset of the plurality of target cell candidates.

According to further example embodiments, a received configuration indicative of said plurality of measurement target cell candidates is indicative of that Layer1 measurement with respect to cells out of said plurality of target cell candidates and/or Layer1 measurement result reporting with respect to cells out of said plurality of target cell candidates is subject to Layer1 measurement demand issuance.

According to a variation of the procedure shown in Figure 5, exemplary additional operations are given, which are inherently independent from each other as such. According to such variation, an exemplary method according to example embodiments may comprise an operation of prohibiting Layer1 measurement with respect to a cell out of said plurality of target cell candidates and/or Layer1 measurement result reporting with respect to said cell out of said plurality of target cell candidates until Layer1 measurement demand presence with respect to said cell out of said plurality of target cell candidates.

According to further example embodiments, said Layer1 measurement demand with respect to said first cell to be measured is indicative of at least one of the following: said first cell, or a Layer1 measurement type, or a Layer1 measurement reporting type.

Example embodiments outlined and specified above are explained below in more specific terms.

As mentioned above, according to such example embodiments, a target cell indication from the network side (e.g. gNB) to a terminal (e.g. UE) may contain one or more of a target cell identifier, a measurement resource type, and/or a measurement reporting mechanism. The target cell indication is, however, not limited to such content.

The target cell identifier may be a target cell ID (e.g., either PCI or information derived from PCI), which is included in a message corresponding to the target cell indication.

According to example embodiments, the measurement resource type indicates the measurement type L1 reference signal (RS) type, the SSB, an SSB index, or the CSI-RS, and at least one reference signal type (SSB / CSI-RS).

According to example embodiments, the UE may derive whether the measurement resource type it is intra-frequency or inter-frequency based on the current configuration.

According to example embodiments, the measurement reporting mechanism can be indicated explicitly (if more than one measurement reporting mechanism is configured per target cell). Alternatively, the measurement reporting mechanism can be included already in the RRC measurement configuration and impacts when / how the network expects to receive the L1-measurement report (based on measurement type).

According to example embodiments, the indication transmit mechanism may be
- MAC CE based: Either dedicated MAC CE, or combined with another MAC CE,
- RRC configuration based: RRC reconfiguration contains on which target cell the UE performs (is to perform) L1 measurement after conditions are met,
- based on a combination of both: For instance, an RRC configuration includes the indication but upon receiving MAC CE, the measurements are changed, or vice versa (e.g., latest configuration overwrites a former configuration).
- Downlink control information (DCI) based: Same information as discussed above can instead be carried in DCI.

According to example embodiments, the following network actions may be implemented before/after transmitting the indication:
- Target cell preparation: Prior or upon transmitting this indication, the network may activate the corresponding reference signal indicated in the target cell message (target cell ID, type, resource),
- If the target cell type is CSI-RS, the network may transmit an indication also to the target cell ID to activate the CSI-RS reference signal,
- This may be overseen by a timer (configured on both UE and network side) to limit the amount of reference signals transmitted.

According to example embodiments, upon receiving the indication, the following measurement conditions may apply:
- The UE may perform the measurements based on a measurement delay specified e.g. in TS 38.331 or TS 38.133,
- A number of measurements to perform, for instance at least 3 for the indicated target, and a measurement resource type,
- Conditions in which measurements are performed, e.g. the target cell stays detected, or signal to interference and noise ratio (SINR) meets a specific condition.

In relation to the L3 measurement report prior to target cell indication, according to example embodiments, a target may need to be included in the UE transmitted L3 measurement report to be processed upon arrival. This case is valid especially for LTM where it may be expected that the UE transmits an L3 measurement report from which the network knows the target cell configuration.

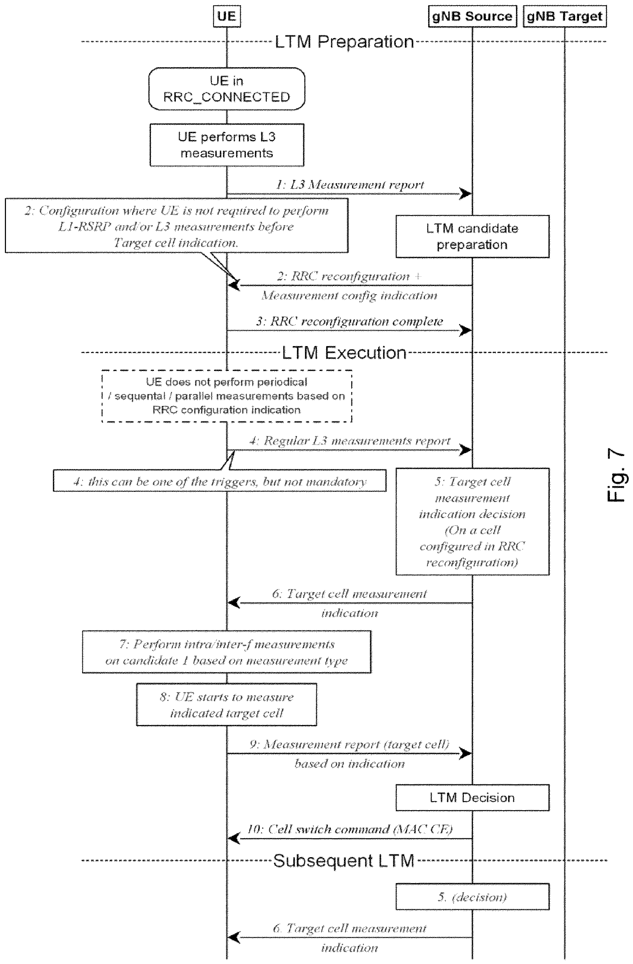

Figure 7 shows a schematic diagram of signaling sequences according to example embodiments.

In a step 1 of Figure 7, an (a normal) L3 measurement report is transmitted from the UE to a (source) gNB.

In a step 2 of Figure 7, according to example embodiments, an RRC reconfiguration is transmitted from the (source) gNB to the UE.

The RRC reconfiguration may include a measurement configuration, which is (to be) applied on a measurement indicated in the target cell measurement indication (based on PCI and measurement type).

According to example embodiments, the RRC reconfiguration includes event based reporting thresholds.

The RRC reconfiguration is indicative of (or considered as indicating) a configuration where/that the UE is not required to perform L1-RSRP and/or L3 measurements before target cell indication.

In a step 3 of Figure 7, a (usual) RRC reconfiguration complete message is transmitted from the UE to the (source) gNB.

In a step 4 of Figure 7, according to example embodiments, a regular (normal) L3 measurement report is transmitted from the UE to the (source) gNB.

According to example embodiments, this measurement report can be used by the network as a trigger for the subsequent target cell measurement indication decision. As an alternative, the network autonomously requests target cell measurements.

In a step 5 of Figure 7, according to example embodiments, the target cell measurement indication decision is made by the network (e.g. (source) gNB)). As mentioned, the target cell measurement indication decision may be e.g. based on the L3 measurement report (e.g., source cell reference signal received power (RSRP) / reference signal received quality (RSRQ) are above / below a threshold, a target cell becomes better than the source cell, or other measurement events ("A-events")).

The network may also base this on autonomous decision. For example, the decision can be based on source cell congestion, network planning decisions, or network procedures to request LTM measurement reports.

In a step 6 of Figure 7, according to example embodiments, the (source) gNB transmits a target cell measurement indication as explained above to the UE. That is, the serving cell transmits an indication to the UE which includes one or more of a target cell ID (e.g., PCI), a LTM measurement type (intra-f (intra-frequency), inter-f (inter-frequency), L1-RSRP), and/or a measurement reporting type.

According to example embodiments, this is implemented as a reference to an existing measurement configuration.

According to example embodiments, this indication may contain multiple measurement indications.

According to example embodiments, this indication is MAC CE based or DCI or similar based.

In a step 7 of Figure 7, according to example embodiments, the UE performs intra/inter-frequency measurements on the cell candidate based on the indicated measurement type and/or PCI. That is, the UE performs target cell (L1) measurements at least on the measurement type which is indicated. The UE will potentially also prepare a report based on the indicated reporting type.

According to example embodiments, the UE may start to report the measurements immediately, or UE may wait that a configured event occur for the indicated target cell, and start reporting after that trigger/event occurs.

According to example embodiments, the UE measures only the indicated target cells.

In a step 8 of Figure 7, according to example embodiments, the UE starts to measure the indicated target cell. In particular, the UE performs measurements based on previous RRC configuration and the received target cell indication.

In a step 9 of Figure 7, the UE transmits a corresponding measurement report of/for the target cell to the (source) gNB.

In a step 10 of Figure 7, the (source) gNB transmits an LTM cell switch command (e.g. for cell switch to the (target) gNB corresponding to the measured candidate cell) to the UE.

According to example embodiments, in subsequent LTMs, the network can transmit a target cell measurement indication to start (a next) UE measurement cycle, which eventually may lead to handover/cell switch.

The above principle according to example embodiments may be specified as follows.
LTM L1 measurements
Number of L1 candidate measurements to support
RAN1 Agreement
   - For L1 measurement report for Rel-18 L1/L2 mobility, if UE event triggered report for L1 measurement is supported based on further study
      - At least the following aspects may be considered,
      - How to define UE event and exact definition of events,
      - Report container,
      - Resource allocation/assignment for UE event triggered report,
      - Necessity of indication to gNB when the condition UE event is met, and how, and
      - Necessity to define the condition to start/stop the reporting.
UE is configured with several candidate cell configurations (e.g., 8 candidate cell configurations). Furthermore, UE is required to perform measurements on multiple candidate cells, and use either semi-persistent report trigger mechanism or event based report triggering mechanism. From RAN4 point of view, this can be resource consuming for UEs to perform these L1 measurements just for LTM.
Observation 1: Performing LTM measurements for all of the candidate cells is resource consuming for UE in both, event triggered and semi-persistent reporting mechanism.
From RAN4 point of view, UE requirements may support less LTM candidate measurements as the number of configurations is. Therefore, this creates an issue on how to select which candidate cell to select for LTM L1-measurements. One way to do the target measurement selection is that the network will indicate which target cell, and possibly measurement resource UE should be performing L1-RSRP measurement. The reporting can be still semi-persistent or event based, and the measurement duration could be limited to a certain time to reduce the number of measurements UE needs to perform. Subsequently, once UE has transmitted a measurement report to the DU in a RAN1/RAN2 defined format, the UE may expect that the target cell where LTM is triggered is based on the previous measurements.
The number of target cells UE can measure may depend on configured measurement resource. This number can be different for SSBs and CSI-RS measurements.
Observation 2: UE can be configured with multiple target cell configurations and only a subset of these configurations are expected to be measured.
Observation 3: Number of consecutive target cells depends on measurement resource(s) and measurement configurations.
Proposal 1: Network indicates to UE which target cell(s) to perform L1 measurements prior to LTM cell switch.
Proposal 2: Number of supported target cells (per measurement resource type) is depending on measurement resource.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network node or entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

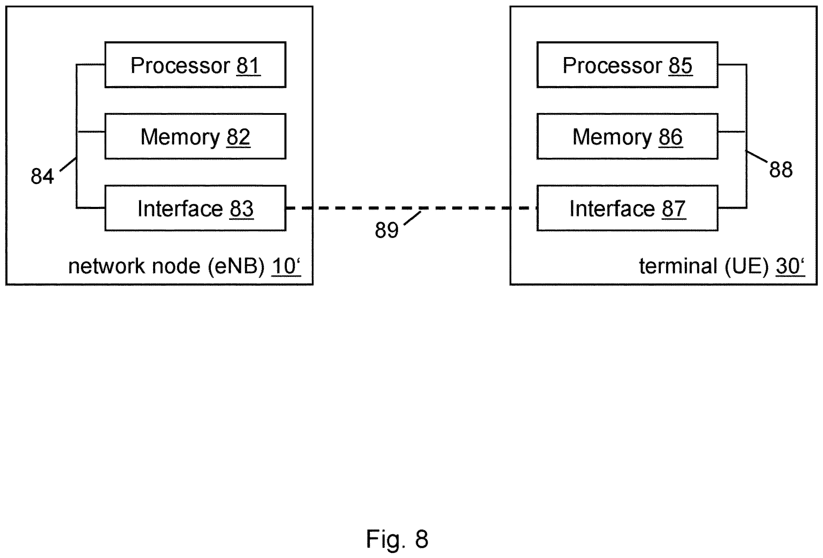

In Figure 8, an alternative illustration of apparatuses according to example embodiments is depicted. As indicated in Figure 8, according to example embodiments, the apparatus (network node) 10' (corresponding to the network node 10) comprises a processor 82, a memory 82 and an interface 83, which are connected by a bus 84 or the like. Further, according to example embodiments, the apparatus (terminal) 30' (corresponding to the terminal 30) comprises a processor 85, a memory 86 and an interface 87, which are connected by a bus 88 or the like, and the apparatuses may be connected via link 89, respectively.

The processor 81/85 and/or the interface 83/87 may also include a modem or the like to facilitate communication over a (hardwire or wireless) link, respectively. The interface 83/87 may include a suitable transceiver coupled to one or more antennas or communication means for (hardwire or wireless) communications with the linked or connected device(s), respectively. The interface 83/87 is generally configured to communicate with at least one other apparatus, i.e. the interface thereof.

The memory 82/86 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node 10 comprises at least one processor 81, at least one memory 82 including computer program code, and at least one interface 83 configured for communication with at least another apparatus. The processor (i.e. the at least one processor 81, with the at least one memory 82 and the computer program code) is configured to perform determining a plurality of target cell candidates for Layer1/Layer2 triggered mobility of a terminal (thus the apparatus comprising corresponding means for determining), to perform deciding on a first cell to be measured out of the plurality of target cell candidates (thus the apparatus comprising corresponding means for deciding), and to perform transmitting, towards the terminal, information indicative of a Layer1 measurement demand with respect to said first cell to be measured (thus the apparatus comprising corresponding means for transmitting).

According to example embodiments, an apparatus representing the terminal 30 comprises at least one processor 85, at least one memory 86 including computer program code, and at least one interface 87 configured for communication with at least another apparatus. The processor (i.e. the at least one processor 85, with the at least one memory 86 and the computer program code) is configured to perform receiving information indicative of a Layer1 measurement demand with respect to a first cell to be measured out of a plurality of target cell candidates for Layer1/Layer2 triggered mobility of the terminal (thus the apparatus comprising corresponding means for receiving), to perform deriving a Layer1 measurement configuration with respect to said Layer1 measurement demand with respect to said first cell to be measured (thus the apparatus comprising corresponding means for deriving), to perform performing a Layer1 measurement with respect to said first cell to be measured based on said Layer1 measurement configuration (thus the apparatus comprising corresponding means for performing), and to perform transmitting information indicative of a Layer1 measurement result with respect to said first cell to be measured (thus the apparatus comprising corresponding means for transmitting). Such information may be a Layer1 measurement report, for example.

For further details regarding the operability/functionality of the individual apparatuses, reference is made to the above description in connection with any one of Figures 1 to 7, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;

- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for L1/L2 triggered mobility cell measurement control. Such measures exemplarily comprise determining a plurality of target cell candidates for L1/L2 triggered mobility of a terminal, deciding on a first cell to be measured out of the plurality of target cell candidates, and transmitting, towards the terminal, information indicative of a Layer1 measurement demand with respect to said first cell to be measured.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

### List of acronyms and abbreviations

- 3GPP: 3rd Generation Partnership Project
- CE: control element
- CSI-RS: channel state information reference signal
- DCI: downlink control information
- FR2: frequency range 2
- L1: Layer1
- L2: Layer2
- L3: Layer3
- LTM: L1/L2 triggered mobility
- MAC: medium access control
- PCI: physical cell ID
- RRC: radio resource control
- RS: reference signal
- RSRP: reference signal received power
- RSRQ: reference signal received quality
- SCS: subcarrier spacing
- SINR: signal to interference and noise ratio
- SSB: synchronization signal block
- UE: user equipment

## Claims

1. A method of a terminal, the method comprising
receiving information indicative of a Layer1 measurement demand with respect to a first cell to be measured out of a plurality of target cell candidates for Layer1/Layer2 triggered mobility of the terminal,
deriving a Layer1 measurement configuration with respect to said Layer1 measurement demand with respect to said first cell to be measured,
performing a Layer1 measurement with respect to said first cell to be measured based on said Layer1 measurement configuration,
transmitting information indicative of a Layer1 measurement result with respect to said first cell to be measured, and
receiving information indicative of a Layer1 measurement demand with respect to a second cell to be measured out of said plurality of target cell candidates,
deriving a Layer1 measurement configuration with respect to said Layer1 measurement demand with respect to said second cell to be measured, and
performing a Layer1 measurement with respect to said second cell to be measured based on said Layer1 measurement configuration.

2. The method according to claim 1, wherein
the terminal is configured to perform said Layer1 measurement only to a subset of the plurality of target cell candidates.

3. The method according to claim 2, wherein
a received configuration indicative of said plurality of measurement target cell candidates is indicative of that Layer1 measurement with respect to cells out of said plurality of target cell candidates and/or Layer1 measurement result reporting with respect to cells out of said plurality of target cell candidates is subject to Layer1 measurement demand issuance.

4. The method according to any of claims 1 to 3, further comprising
prohibiting Layer1 measurement with respect to a cell out of said plurality of target cell candidates and/or Layer1 measurement result reporting with respect to said cell out of said plurality of target cell candidates until Layer1 measurement demand presence with respect to said cell out of said plurality of target cell candidates.

5. The method according to any of claims 1 to 4, wherein
said Layer1 measurement demand with respect to said first cell to be measured is indicative of at least one of the following:
said first cell, or
a Layer1 measurement type, or
a Layer1 measurement reporting type.

6. An apparatus of a terminal, the apparatus comprising:
receiving circuitry configured to receive information indicative of a Layer1 measurement demand with respect to a first cell to be measured out of a plurality of target cell candidates for Layer1/Layer2 triggered mobility of the terminal,
deriving circuitry configured to derive a Layer1 measurement configuration with respect to said Layer1 measurement demand with respect to said first cell to be measured,
performing circuitry configured to perform a Layer1 measurement with respect to said first cell to be measured based on said Layer1 measurement configuration,
transmitting circuitry configured to transmit information indicative of a Layer1 measurement result with respect to said first cell to be measured,
receiving circuitry configured to receive information indicative of a Layer1 measurement demand with respect to a second cell to be measured out of said plurality of target cell candidates,
deriving circuitry configured to derive a Layer1 measurement configuration with respect to said Layer1 measurement demand with respect to said second cell to be measured, and
performing circuitry configured to perform a Layer1 measurement with respect to said second cell to be measured based on said Layer1 measurement configuration.

7. The apparatus according to claim 6, wherein
the terminal is configured to perform said Layer1 measurement only to a subset of the plurality of target cell candidates.

8. The apparatus according to claim 7, wherein
a received configuration indicative of said plurality of measurement target cell candidates is indicative of that Layer1 measurement with respect to cells out of said plurality of target cell candidates and/or Layer1 measurement result reporting with respect to cells out of said plurality of target cell candidates is subject to Layer1 measurement demand issuance.

9. The apparatus according to any of claims 6 to 8, further comprising
prohibiting circuitry configured to prohibit Layer1 measurement with respect to a cell out of said plurality of target cell candidates and/or Layer1 measurement result reporting with respect to said cell out of said plurality of target cell candidates until Layer1 measurement demand presence with respect to said cell out of said plurality of target cell candidates.

10. The apparatus according to any of claims 6 to 9, wherein
said Layer1 measurement demand with respect to said first cell to be measured is indicative of at least one of the following:
said first cell, or
a Layer1 measurement type, or
a Layer1 measurement reporting type.

11. A computer program product comprising computer-executable computer program code which, when the program is run on an apparatus of a terminal, is configured to cause the apparatus of a terminal, to perform:
receiving information indicative of a Layer1 measurement demand with respect to a first cell to be measured out of a plurality of target cell candidates for Layer1/Layer2 triggered mobility of the terminal,
deriving a Layer1 measurement configuration with respect to said Layer1 measurement demand with respect to said first cell to be measured,
performing a Layer1 measurement with respect to said first cell to be measured based on said Layer1 measurement configuration,
transmitting information indicative of a Layer1 measurement result with respect to said first cell to be measured
receiving information indicative of a Layer1 measurement demand with respect to a second cell to be measured out of said plurality of target cell candidates,
deriving a Layer1 measurement configuration with respect to said Layer1 measurement demand with respect to said second cell to be measured, and
performing a Layer1 measurement with respect to said second cell to be measured based on said Layer1 measurement configuration.

12. The computer program product according to claim 11, wherein when the program is run on an apparatus of a terminal, is configured to cause the apparatus of a terminal to perform said Layer1 measurement only to a subset of the plurality of target cell candidates.

13. The computer program product according to claim 12, wherein when the program is run on an apparatus of a terminal, is configured to cause the apparatus of a terminal to perform:
prohibiting Layer1 measurement with respect to a cell out of said plurality of target cell candidates and/or Layer1 measurement result reporting with respect to said cell out of said plurality of target cell candidates until Layer1 measurement demand presence with respect to said cell out of said plurality of target cell candidates.

14. An apparatus comprising
determining circuitry configured to determine a plurality of target cell candidates for Layer1/Layer2 triggered mobility of a terminal,
deciding circuitry configured to decide on a first cell to be measured out of the plurality of target cell candidates, and
transmitting circuitry configured to transmit, towards the terminal, information indicative of a Layer1 measurement demand with respect to said first cell to be measured.

15. The apparatus according to claim 14, further comprising
receiving circuitry configured to receive, from said terminal, information indicative of a Layer1 measurement result with respect to said first cell to be measured.
